## Europäisches Patentamt
## European Patent Office
## Office européen des brevets

(19)

(11) Numéro de publication: **0 047 694**
**B1**

(12)

# FASCICULE DE BREVET EUROPEEN

(45) Date de publication du fascicule du brevet:
**06.02.85**

(51) Int. Cl.⁴: **B 64 G 1/44**

(21) Numéro de dépôt: **81401355.3**

(22) Date de dépôt: **27.08.81**

(54) Dispositif régulateur centrifuge à entraînement direct pour mécanisme spatial articulé.

(30) Priorité: **04.09.80 FR 8019104**

(43) Date de publication de la demande:
**17.03.82 Bulletin 82/11**

(45) Mention de la délivrance du brevet:
**06.02.85 Bulletin 85/6**

(84) Etats contractants désignés:
**CH DE GB IT LI NL SE**

(56) Documents cités:
**US - A - 3 587 999**
**US - A - 4 076 191**
**US - A - 4 133 501**
**US - A - 4 133 502**

**NASA TECH. BRIEF, mai 1974, no. 2 B74-10048, Ames Research Center "Solar Array Deployment from a Spinning Spacecraft"**

(73) Titulaire: **SOCIETE NATIONALE INDUSTRIELLE AEROSPATIALE, 37 boulevard de Montmorency, F-75016 Paris Cedex 16 (FR)**

(72) Inventeur: **Vermalle, Jean Claude, 893 rue Janvier Pasero La Chartreuse, F-06210 Mandelieu (FR)**

(74) Mandataire: **Rinuy, Guy et al, 14, Avenue de la Grande Armée, F-75017 Paris (FR)**

## Description

La présente invention concerne un dispositif régulateur centrifuge permettant le contrôle direct du mouvement de rotation d'un élément mobile de satellite. Ledit régulateur est disposé, conformément à l'invention, au niveau d'une articulation de liaison mécanique dudit élément mobile de façon que ce soit ce dernier qui entraîne directement le dispositif régulateur.

On sait qu'au cours de la réalisation de la configuration opérationnelle d'un satellite, la mise en position déployée de certains éléments peut être obtenue d'une manière avantageuse par un mouvement de rotation, le contrôle de ce mouvement étant nécessaire pour différentes raisons qui seront exposées par la suite.

Le dispositif régulateur centrifuge conforme à l'invention, en permettant d'assurer un contrôle direct de la vitesse angulaire relative de deux éléments mobiles, ou d'un élément par rapport à une structure, résout le problème d'une façon particulièrement simple et efficace, en ce qui concerne la technologie spatiale.

Il est à noter, en effet, que la présente invention peut être appliquée à toutes sortes d'articulations, principalement à celles mues par des ressorts, comme par exemple celles des panneaux solaires, des réflecteurs d'antenne, des équipements divers de mesure, des générateurs, d'énergie nucléaire ou de particules, etc., montés en bout de bras articulés.

Dans les systèmes actuellement en service, les solutions sont beaucoup plus complexes que celle de la présente invention.

C'est ainsi, en particulier que:
– Dans un cas, c'est un dérouleur de câble qui contrôle le mouvement complexe, à savoir la rotation autour de deux axes successifs, d'un panneau déployable, ledit dérouleur comprenant un régulateur du type connu utilisé pour assurer la régulation de la vitesse de retour des cadrans d'appel téléphoniques en rendant cette vitesse peu sensible au couple appliqué (voir, par exemple, l'article NASA TECH. BRIEF de mai 1974, N° B 74-10048);
– Dans un autre cas, le mouvement de dépliage d'un ensemble de panneaux rigides articulés est contrôlé au moyen d'un dispositif à câble avec renvois à poulies, le débit dudit câble étant régulé par un régulateur du même type que ci-dessus.

La présente invention, en permettant d'assurer un contrôle de la vitesse angulaire relative de deux éléments mobiles, ou d'un élément mobile par rapport à une structure, au moyen d'une liaison mécanique directe avec un régulateur centrifuge, présente des avantages certains par rapport aux systèmes à câbles actuellement en service rappelés ci-dessus.

Parmi ces avantages, on peut citer:

– la possibilité d'adaptation à des débattements angulaires depuis des angles très faibles jusqu'à des angles supérieurs à 180°;
– la régularité des efforts par rapport aux systèmes à câbles directs, pour des angles importants;
– les possibilités d'adaptation, notamment en ce qui concerne l'indépendance de l'implantation en divers points pour les ensembles complexes et la simplification de la conception des mécanismes correspondants;
– le contrôle de la vitesse de rotation proprement dite, quel que soit l'angle d'ouverture de l'élément mobile, ce qui a pour effet de limiter les effets dynamiques, en fin de course, et par conséquent de rendre les réactions moins importantes sur la structure du satellite dont l'orientation se trouve ainsi moins perturbée au cours de la manœuvre.

Par rapport en document NASA TECH. BRIEF de mai 1974, N° B 74-10048 qui décrit déjà un dispositif régulateur centrifuge qui, dans le cadre d'un usage spatial, permet le contrôle de la vitesse angulaire relative d'un élément mobile par rapport à un autre élément en vue de la maintenir à une valeur constante, l'invention se caractérise en ce que le dispositif, comporte un ensemble mécanique, constitué d'un régulateur centrifuge combiné à un multiplicateur d'entraînement, le carter dudit ensemble mécanique étant rendu solidaire dudit autre élément, au niveau de l'articulation entre les deux éléments, tandis que l'arbre d'entrée dudit multiplicateur d'entraînement du régulateur centrifuge est commandé en rotation par le mouvement relatif entre les deux éléments articulés entre eux.

D'autres caractéristiques, avantages et particularités de la présente invention ressortiront de la description qui en est donnée ci-après en référence aux dessins schématiques annexés représentant, à titre purement explicatif et nullement limitatif, une application possible de ladite invention à un panneau solaire rigide articulé sur une structure.

Sur ces dessins:

les figures 1, 2 et 3 représentent trois montages différents possibles de l'ensemble du dispositif régulateur tant par rapport à la structure que par rapport à l'élément mobile articulé sur cette dernière;

la figure 4 est une vue en coupe longitudinale axiale d'un ensemble régulateur-multiplicateur permettant de mettre en œuvre l'invention;

la figure 5 est une vue en perspective cavalière dudit ensemble régulateur-multiplicateur, le carter étant supposé transparent pour la clarté du dessin; et

la figure 6 est un schéma explicatif du fonctionnement du régulateur à freinage centrifuge proprement dit.

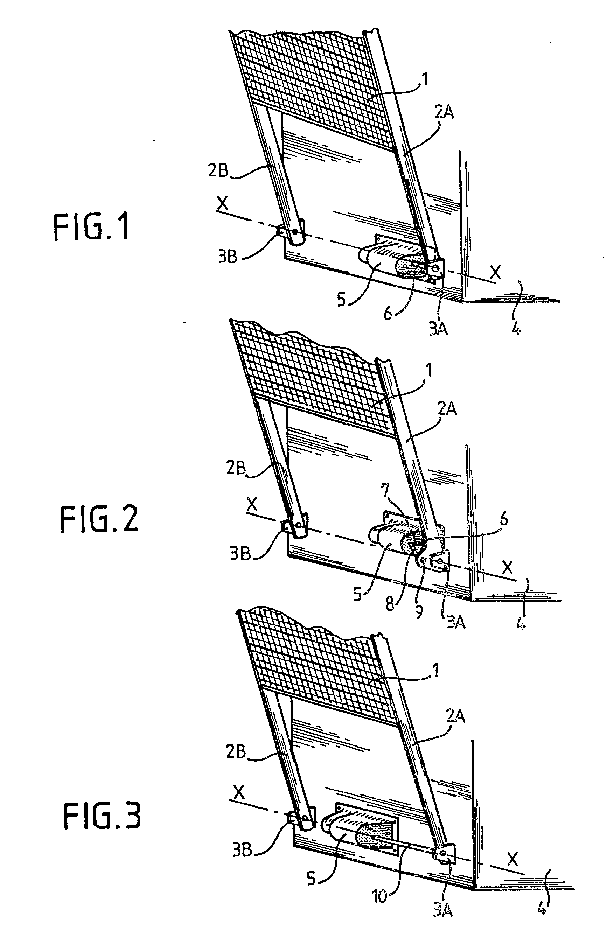

En se référant aux figures 1, 2 et 3, on voit un panneau solaire rigide 1 monté sur deux bras de suspension 2A, 2B articulés, sur des supports respectifs 3A, 3B, eux-mêmes solidaires d'une structure de satellite 4. Le dispositif régulateur-multiplicateur 5 est fixé sur la structure 4.

Afin que le dispositif régulateur-multiplicateur 5 permette de contrôler la vitesse relative de l'élément mobile 1 par rapport à la structure 4, on a vu précédemment que l'arbre d'entrée du multiplicateur devait être commandé en rotation par le mouvement relatif entre les deux éléments 1 et 4.

Conformément à l'invention, on fixe donc le régulateur-multiplicateur 5 au niveau de l'axe d'articulation XX des bras 2A, 2B sur leurs supports 3A, 3B. Par ailleurs, on relie mécaniquement l'arbre d'entrée du multiplicateur à l'élément mobile, en l'occurrence à l'un des bras 2A de support.

Cette liaison mécanique peut s'opérer suivant l'une des trois formes de réalisation des figures 1, 2 et 3.

La figure 1 montre le montage de base où l'arbre d'entrée 6 du multiplicateur se trouve en prise directe avec le bras 2A auquel il sert d'axe d'articulation sur le support 3A.

La figure 2 montre un montage à entraînement semi-direct dans lequel l'arbre d'entrée 6 du multiplicateur est relié au bras 2A au moyen d'un levier 7 et d'une bielle 8 articulée en 9 sur un épaulement dudit bras 2A. Ce montage a pour intérêt de ne pas nécessiter un positionnement rigoureux du régulateur 5 par rapport à l'axe XX. Par contre, il ne permet un débattement du panneau 1 par rapport à la structure 4 que de l'ordre de 90°.

La figure 3 montre un montage dans lequel l'arbre d'entrée du multiplicateur est relié au bras 2A par l'intermédiaire d'une barre de torsion 10 faisant fonction d'atténuateur de l'ensemble régulateur-multiplicateur. Ce montage permet d'avoir un léger désaxement dans l'implantation du dispositif régulateur 5.

Il est bien évident que le problème resterait du même ordre si le panneau rigide 1 s'articulait non pas sur une structure 4 mais sur un élément lui-même mobile par rapport à une structure.

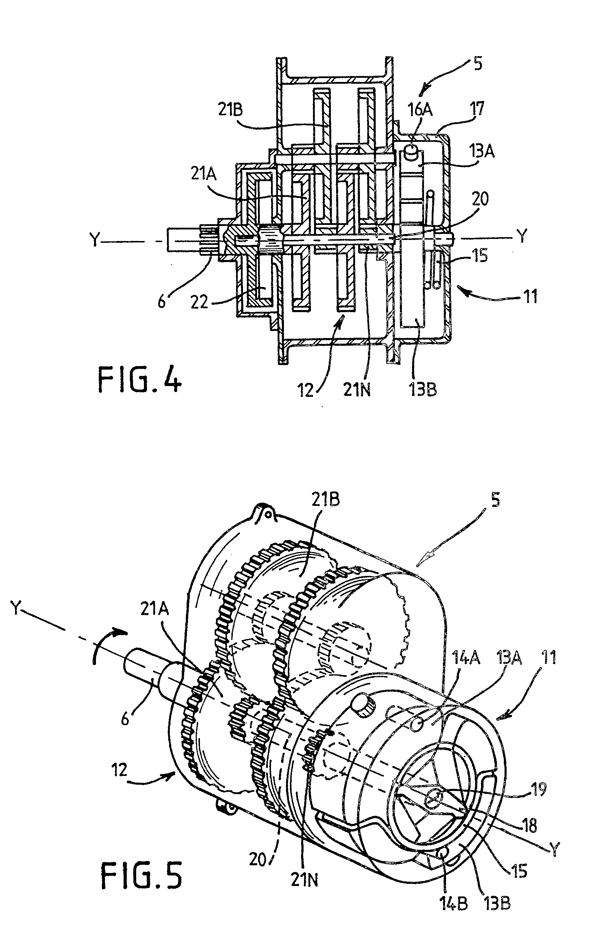

On va maintenant décrire en détail, en se référant aux figures 4, 5 et 6, un dispositif régulateur permettant la mise en œuvre de la présente invention.

L'ensemble désigné par la référence générale 5 est constitué de deux parties principales, à savoir:
– un régulateur à freinage centrifuge désigné par la référence générale 11, par exemple du type connu de celui utilisé pour assurer la régulation de la vitesse de retour des cadrans d'appel téléphoniques qui se caractérise par une vitesse de rotation peu variable en fonction du couple appliqué;
– un multiplicateur désigné par la référence générale 12 permettant d'assurer une vitesse de rotation convenable du régulateur 11, comme on le verra en détail plus loin. C'est l'arbre d'entrée 6 de ce multiplicateur qui est commandé en rotation par le mouvement relatif entre l'élément mobile et la structure, suivant l'un des montages décrits aux figures 1 à 3.

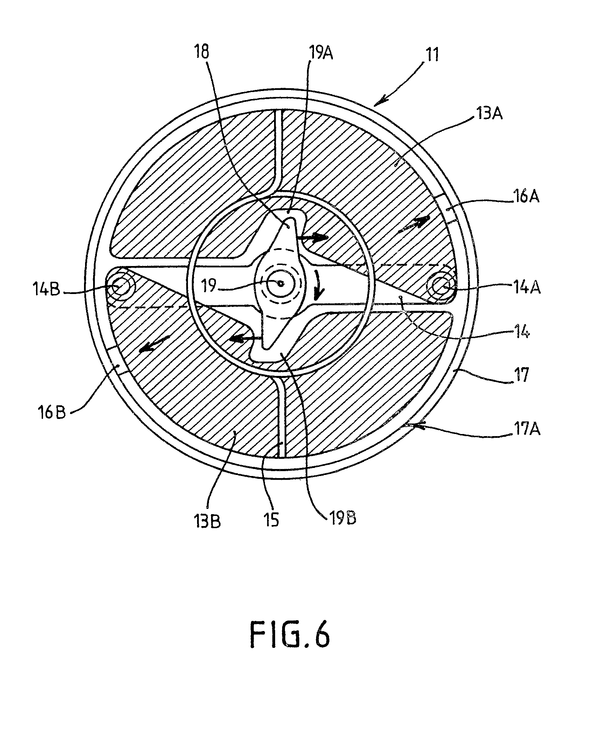

On rappellera ci-après brièvement la composition et le fonctionnement du régulateur à freinage centrifuge 11, en référence à la figure 6.

Ledit régulateur est composé de deux masselottes 13A et 13B de forme générale demi-cylindrique qui sont articulées, au moyen d'axes 14A, 14B, aux deux extrémités d'un fléau commun libre 14, et sont retenues radialement par un ressort 15. Lesdites masselottes portent, sur leur paroi externe cylindrique, des patins 16A, 16B qui peuvent venir frotter contre la paroi interne 17A d'un tambour 17 solidaire du carter de l'ensemble du dispositif.

L'entraînement en rotation, du couple de masselottes 13A, 13B est assuré au moyen d'une came à deux têtes 18 solidaire de l'arbre de commande 19 du régulateur, la came venant porter sur des bossages appropriés 19A, 19B pratiqués dans la paroi interne desdites masselottes.

Lorsque l'ensemble mobile atteint la vitesse critique pour laquelle les patins 16A, 16B effleurent juste la face interne 17A du tambour 17, on voit que si on applique à l'arbre de commande 19 un couple additionnel, la came 18 va appliquer sur les masselottes 13A, 13B un couple d'ouverture. Pour un dimensionnement bien adapté, cette action supplémentaire aura pour effet de produire un freinage sans modifier sensiblement la vitesse de rotation pour autant.

L'équilibre est obtenu lorsque le couple produit par le frottement tangentiel des patins 16A, 16B sur la paroi 17A du tambour 17 dû à l'effet centrifuge sur les masselottes 13A, 13B, compte-tenu du ressort 15, et augmenté de l'effet du couple d'ouverture susmentionné, est égal à celui appliqué sur ledit arbre de commande 19.

En se reportant aux figures 4 et 5, on voit que le multiplicateur 12 qui est associé au régulateur 11 comporte, entre son arbre d'entrée 6 et son arbre de sortie 20 (lequel est calé sur l'arbre de commande 19 du régulateur centrifuge), plusieurs étages de rapports élevés tels que 21A, 21B, ..., 21N, sous forme de trains d'engrenages cylindriques droits par exemple. On pourrait tout aussi bien employer évidemment une cascade de trains épicycloïdaux ou analogues.

La mise en action de l'ensemble constitué par le régulateur centrifuge 11 entraîné par le multiplicateur 12 se fait par l'arbre d'entrée 6 qui assure la prise directe de la partie mobile avec le premier étage du multiplicateur selon le montage de la figure 1. Dans ce cas, l'axe Y-Y du multiplicateur doit se confondre avec l'axe d'articulation X-X de l'élément mobile 2A, 2B sur la structure 4.

Dans certains cas, une attaque semi-directe de l'arbre d'entrée 6 selon le montage de la figure 2 peut permettre une solution avantageuse en ce qu'elle permet un positionnement moins rigoureux du régulateur.

L'arbre d'entrée 6 du multiplicateur peut être conçu pour comporter des paliers lui permettant de supporter lui-même l'élément mobile dont la vitesse de rotation doit être contrôlée.

Les arbres d'entrée 6 et de sortie 20 du multiplicateur peuvent ne pas être coaxiaux lorsque cette disposition n'est pas souhaitée.

Lors de la mise en œuvre des mécanismes spatiaux, il est toujours prévu des ressorts puissants qui assurent l'écartement initial de la partie mobile.

Ces ressorts produisent des accélérations initiales importantes et le dispositif régulateur ne peut suivre instantanément les vitesse angulaires qui en résultent, en raisons de son inertie apparente produite par le multiplicateur.

Pour limiter les contraintes imposées de ce fait aux premiers étages dudit multiplicateur, il est préconisé d'intercaler sur ledit arbre d'entrée 6 un atténuateur d'un type quelconque approprié dont un exemple de réalisation a été schématisé en 22 sur la figure 4.

Cet atténuateur peut être réalisé au moyen d'un ressort accumulateur d'énergie ou d'un limiteur de couple.

Suivant la raideur nécessaire, l'accumulateur d'énergie peut être réalisé au moyen d'un ressort hélicoïdal travaillant à l'enroulement ou d'une barre de torsion, comme cela a été décrit en référence à la figure 3. Le limiteur de couple peut être, soit à friction, soit à déformation de matière.

**Revendications**

1. Dispositif régulateur centrifuge permettant, dans le cadre d'un usage spatial, le contrôle de la vitesse angulaire relative d'un élément mobile (1) par rapport à un autre élément (4), en vue de la maintenir constante, caractérisé en ce qu'il comporte un ensemble mécanique (5) constitué d'un régulateur centrifuge (11) combiné à un multiplicateur d'entraînement (12), le carter dudit ensemble mécanique (5) étant rendu solidaire dudit autre élément (4) au niveau de l'articulation (XX) entre ces deux éléments (1, 4), tandis que l'arbre d'entrée (6) dudit multiplicateur d'entraînement du régulateur centrifuge est commandé en rotation par le mouvement relatif des deux éléments (1, 4).

2. Dispositif selon la revendication 1, caractérisé en ce que l'élément mobile (2A, 2B) actionne directement en rotation l'arbre d'entrée (6) du multiplicateur, l'axe de l'articulation (XX) de l'élément mobile et celui de l'arbre d'entrée étant coaxiaux.

3. Dispositif selon la revendication 1, caractérisé en ce que l'arbre d'entrée (6) du multiplicateur est équipé d'un levier (7) qui est lui-même actionné par une bielle (8) articulée sur l'élément mobile (2A).

4. Dispositif selon la revendication 1, caractérisé en ce que l'arbre d'entrée (6) du multiplicateur est relié à l'élément mobile (2A) au moyen d'une barre de torsion (10) faisant fonction d'atténuateur.

5. Dispositif selon la revendication 1, caractérisé en ce que l'ensemble mécanique (5) inclut les paliers d'articulation dudit élément mobile.

6. Dispositif selon l'une quelconque des revendications 1 à 5, caractérisé en ce que l'ensemble mécanique (5) contrôle le déploiement d'un panneau solaire.

7. Dispositif selon l'une quelconque des revendications 1 à 5, caractérisé en ce que l'ensemble mécanique (5) contrôle le déploiement d'un réflecteur d'antenne.

8. Dispositif selon l'une quelconque des revendications 1 à 5, caractérisé en ce que l'ensemble mécanique (5) contrôle le déploiement d'un bras support d'appareil de mesure.

9. Dispositif selon l'une quelconque des revendications 1 à 5, caractérisé en ce que l'ensemble mécanique (5) contrôle le déploiement d'un bras support d'une source d'énergie nucléaire ou de particules.

**Claims**

1. A centrifugal regulating device for permitting, within the limits of a space use, direct control of the relative angular speed of a moval element (1) with respect to another element (4) so as to maintain said speed constant, characterized in that it comprises a mechanical assembly (5) consisting of a centrifugal regulator (11) combined with a drive multiplier (12), the housing of said mechanical assembly (5) being fastened to said other element (4) about articulation (XX) between said two elements (1, 4), whereas the input shaft (6) of said drive multiplier of the centrifugal regulator is rotatably driven by the relative motion of both elements (1, 4).

2. A device according to claim 1, characterized in that the movable element (2A, 2B) directly drives into rotation the input shaft (6) of the multiplier, with the articulation axis (XX) of the movable element and that of the input shaft being coaxial.

3. A device according to claim 1, characterized in that the input shaft (6) of the multiplier is provided with a lever (7) which is itself actuated by a connecting rod (8) articulated to the movable element (2A).

4. A device according to claim 1, characterized in that the input shaft (6) of the multiplier is connected to the movable element (2A) by means of a torsion bar (10) acting as an attenuator.

5. A device according to claim 1, characterized in that the mechanical assembly (5) includes the articulation bearings of said movable element.

6. A device according to any one of claims 1 to 5, characterized in that the mechanical assembly (5) controls the folding out of a solar panel.

7. A device according to any one of claims 1 to 5, characterized in that the mechanical assembly (5) controls the folding out of an antenna reflector.

8. A device according to any one of claims 1 to 5, characterized in that the mechanical assembly (5) controls the folding out of an arm for supporting a measurement apparatus.

9. A device according to any one of claims 1 to 5, characterized in that the mechanical assembly (5) controls the folding out of an arm to support a nuclear energy or particle source.

**Patentansprüche**

1. In der Raumfahrt verwendeter Fliehkraftreg-

ler zur direkten Steuerung der relativen Winkelgeschwindigkeit eines beweglichen Elements (1) gegenüber einem anderen Element (4), um diese konstant zu halten, gekennzeichnet durch einen Mechanismus (5), der aus einem mit einem vorgeschalteten Antriebsübersetzungsgetriebe (12) kombinierten Fliehkraftregler (11) besteht und dessen Gehäuse mit dem anderen Element (4) in Höhe des Gelenks (XX) zwischen den beiden Elementen (1, 4) fest verbunden ist, während die Eingangswelle (6) des Antriebs-Übersetzungsgetriebes des Fliehkraftreglers durch die Relativbewegung der beiden Elemente (1, 4) in Drehung versetzt ist.

2. Fliehkraftregler nach Anspruch 1, dadurch gekennzeichnet, dass das bewegliche Element (2A, 2B) die Eingangswelle (6) des Übersetzungsgetriebes direkt in Drehung versetzt, wobei die Gelenkachse (XX) des beweglichen Elements und die Achse der Eingangswelle zueinander koaxial sind.

3. Fliehkraftregler nach Anspruch 1, dadurch gekennzeichnet, dass die Eingangswelle (6) des Übersetzungsgetriebes einen Hebel (7) aufweist, der durch eine auf dem beweglichen Element (2A) angelenkte Stange (8) betätigt ist.

4. Fliehkraftregler nach Anspruch 1, dadurch gekennzeichnet, dass die Eingangswelle (6) des Übersetzungsgetriebes mit dem beweglichen Element (2A) über einen Torsionsstab (10) verbunden ist, der als Dämpfer wirkt.

5. Fliehkraftregler nach Anspruch 1, dadurch gekennzeichnet, dass der Mechanismus (5) die Gelenklager des beweglichen Elements einschliesst.

6. Fliehkraftregler nach einem der vorhergehenden Ansprüche, dadurch gekennzeichnet, dass der Mechanismus (5) das Ausfahren eines Solarpanels steuert.

7. Fliehkraftregler nach einem der Ansprüche 1 bis 5, dadurch gekennzeichnet, dass der Mechanismus (5) das Ausfahren eines Antennen-Reflektors steuert.

8. Fliehkraftregler nach einem der Ansprüche 1 bis 5, dadurch gekennzeichnet, dass der Mechanismus (5) das Ausfahren eines Messgeräteträgers steuert.

9. Fliehkraftregler nach einem der Ansprüche 1 bis 5, dadurch gekennzeichnet, dass der Mechanismus (5) das Ausfahren eines Tragarms einer Kernenergie- oder Teilchenquelle steuert.

FIG.1

FIG.2

FIG.3

FIG.4

FIG.5

FIG.6